# EUROPÄISCHE PATENTSCHRIFT

(11) **EP 0 411 498 B1**
(45) Veröffentlichungstag und Bekanntmachung des Hinweises auf die Patenterteilung: **21.09.1994**
(21) Anmeldenummer: 90114466.7
(22) Anmeldetag: 27.07.1990
(51) Int. Cl.: G05B 19/405, B25J 9/18

(54) **Verfahren zur Manipulation in unzugänglichen Arbeitsräumen**
System for manipulation in non-accessible work rooms
Système de manipulation dans des lieux de travail non accessibles

(30) Priorität: 31.07.1989 DE 3925275
(43) Veröffentlichungstag der Anmeldung: 06.02.1991
(73) Patentinhaber: KERNFORSCHUNGSZENTRUM KARLSRUHE GMBH, D-76021 Karlsruhe (DE)
(72) Erfinder: Kühnapfel, Uwe, D-7514 Egg.-Leopoldshafen (DE); Leinemann, Klaus, Dr., D-7514 Egg.-Leopoldshafen (DE)

(56) Entgegenhaltungen:
- COMPUTER GROUP NEWS, Bd. 22, Nr. 6, Juni 1989, New York,US;Seiten 91 - 96;Mohan M. TRIVEDI et al.: "A vision system for Robotic inspection and manipulation."
- Raymond W. HARRIGAN: "Compcon 88" Nr. 015210, 29.Februar 1988, IEEE Comp. Soc.International conference., San Francisco, CA, US
- Charles W. WARREN: "Robotics and Automation" Nr. 016340, 15.Mai 1989, IEEE Comp. Soc. Press, Scottsdale, AZ, US
- AUTOMATISIERUNGSTECHNIK - AT. Bd. 35, Nr. 12, 1987, München,DE;Seiten 476 -482; H.-J. BULLINGER: "GROSS - Graphisches Roboter-Simulationsprogramm "
- IEEE TRANSACTIONS ON CIRCUITS AND SYSTEMS, Bd. 34, Nr. 11, November 1987, New York,US;Seiten 1417 - 1431; Athanassios IKONOMOPOULOS: "Image processing and analysis in multisensory systems"
- IEEE JOURNAL OF ROBOTICS AND AUTOMATION, Bd. 5, Nr. 3, Juni 1989, New York,US;Seiten 345 - 358; Roger Y. TSAI: "A new technique for fully autonomous and efficient 3D robotics hand/eye calibration."
- COMPUTER IN MECHANICAL ENGINEERING (CIME), Bd.34,September 1986,New York,US;Seiten 34-37;Stephan DERBY:"In position:Simulating robotic workcells on a micro."

## Beschreibung

Die Erfindung betrifft ein Verfahren zur Manipulation in einer unzugänglichen und nicht direkt einsehbaren Arbeitsszene. Solch eine Szene kann im Torus eines Fusionsreaktors oder in stark strahlenden Bereichen einer Wiederaufarbeitungsanlage sein. Solche unzugänglichen Umgebungen gibt es in der Raumfahrt als auch unter Wasser und in Bergwerken.

Ein solches Verfahren soll ein zuverlässiges und sicheres Manipulieren mit einem Manipulator von der Ferne aus ermöglichen unter gleichzeitiger Beobachtung und Darstellung des Ortes, an dem die Arbeit durchzuführen ist. Weiterhin muß ein solches Verfahren auch die kollisionsfreie Bewegung der Manipulatoreinrichtung, der Kamerasysteme, der Transportsysteme oder anderer Komponenten ermöglichen.

Physische Modelle aus Holz, Kunststoff oder anderem werden heute häufig benutzt, um solche Aufgabenstellungen durchzuführen. Andererseits werden für gewisse Anwendungen elektronisch erzeugte Modelle von CAD-Systemen verwendet.

Der Bau physischer Modelle ist teuer. Die Simulation mit dem CAD-System ist zu langsam (keine Realzeit, da andere Zielsetzung) und bezüglich der Bedienschnittstelle nicht problemgerecht, da sie für die Erstellung von Modellen, nicht aber für die Simulation und Kontrolle von Arbeitsabläufen oder Arbeitsprozessen entwickelt wurde. Bei den bekannten elektronischen Flug- und Fahrsimulatoren wird keine Realzeitsimulation realisiert, bei der Sensorsignale aus dem realen Prozeß (z.B. dem bewegten Manipulator) direkt das Modell beeinflussen (Monitoring-Modus). Dies und die Integration der Teilsysteme zu einem Gesamtverfahren verspricht aber erst eine durchgreifende Verbesserung für den Operateur.

In Robotersysteme 5, S. 9-16, 1989, "Umwelterfassung und modellgestützte Kollisionsdetektion bei hochflexiblen Handhabungsgeräten", von M. Wadle und M. Cramer, Karlsruhe im Springer-Verlag 1989, wird ein stark vereinfachtes Verfahren im Sinne eins einfachen abstrakten geometrischen Modells beschrieben, das zur Szenenbeobachtung und Kollisionskontrolle herangezogen wird. Das beschriebene Arbeitssystem verwendet keine Beobachtungskamera, da eine direkte Beobachtung der Arbeitsszenen durch den Operateur vorausgesetzt wird.

Bekannt ist ein Aufsatz aus IEEE COMPCON 88; 29.2.88; San Francisco, Ca. US; S. 54 - 58; R.W. Harrigan: "Intelligent Control of Robot Manipulators in Hazardous Environments" der als nächstliegender Stand der Technik betrachtet wird. Darin wird ein Verfahren zur Manipulation eines Greifarmes in einem unzugänglichen Bereich durch einen echtzeitfähigen Rechner offenbart. Die Objekte in diesem Bereich sind dabei im Rechner durch ein mathematisches Modell repräsentiert, das fortwährend durch Sensorinformationen aktualisiert wird. Operationen, die der Greifarm durchführen soll, sind entweder vorprogrammiert oder werden von einem Operateur per Hand veranlaßt. Im Falle der Bedienung des Greifarmes durch einen Operateur erhält dieser Informationen über die aktuelle Position des Greifarmes.

Über Sensoren wird also die Szene oder der Bereich abgetastet und durch das Computersystem entsprechend programmiert. Erst durch Eingabe dieser ertasteten Umgebung sind Kollisionen des Roboter-Manipulators darin vermeidbar.

Der Erfindung liegt daher die Aufgabe zugrunde, ein Verfahren zu entwickeln,das das Hantieren von der Ferne in unzugänglichen, aber von ihrer Umgebung her bekannten Bereichen ohne Kollision in Realzeit ermöglicht.

Die Aufgabe wird erfindungsgemäß durch die kennzeichnenden Verfahrensschritte des Anspruchs 1 gelöst. Die Unteransprüche 2-4 beschreiben vorteilhafte Erweiterungen des erfindungsgemäßen Verfahrens.

Die mit der Erfindung erzielten Vorteile bestehen darin, daß mit diesem Verfahren die Steuerung eines dreidimensionalen rechnerinternen Geometriemodells einer komplexen Arbeitsszene durch die Sensorik Größen des realen, zu steuernden Handhabungsprozesses und die Veränderungen der geometrischen Parameter (z.B. Winkel, Durchbiegung, Zusammenbau) erfaßt wird. Die Integration von Fernsehtechnik mit gesteuerten Kameras und dreidimensionaler Computergraphik, auch "Integriertes Sehen" genannt, dient zur Verbesserung des Fernbeobachtens bzw. des Überwachens in schwer oder unzugänglichen Bereichen.

Eine realzeitgerechte Datenstruktur, insbesondere eine hierarchische Datenstruktur, die für eine Realzeit - Sensorsteuerung geeignet ist, erlaubt darüber hinaus eine problemgerechte Variation des örtlichen Detaillierungsgrades der synthetischen Szenendarstellung und eine schnelle Kollisionsberechnung.

Die Kombination des "Integrierten Sehens" und der sofortigen Programmierung, Simulation und Ausführung neuer Arbeitsvorgänge wird unter Einsatz eines einzigen Instruments für verschiedene, aber zusammenhängende Aufgaben eines Operators durchgeführt. Der enge Arbeitszyklus "Planen-Programmieren-Simulieren-Ausführen-Überwachen" wird schnell und ohne Bruch durchlaufen. Lokale Modellier- und Editierfunktionen zur schnellen, interaktiven Anpassung oder Korrektur der Modelldaten an den aktuellen Zustand der Anlage werden eingesetzt, falls diese Veränderungen nicht durch die Sensorik erfaßt werden.

Die Durchführung des erfindungsgemäßen Verfahrens wird anhand eines Grundschemas für das "Integrierte Verfahren" näher erläutert.

Es zeigen
Fig. 1. Grundschema des "Integrierten Verfahrens"
Fig. 2. Handhabungsarm im Innern eines Torus
Fig. 3. Bild einer Arbeitsszene

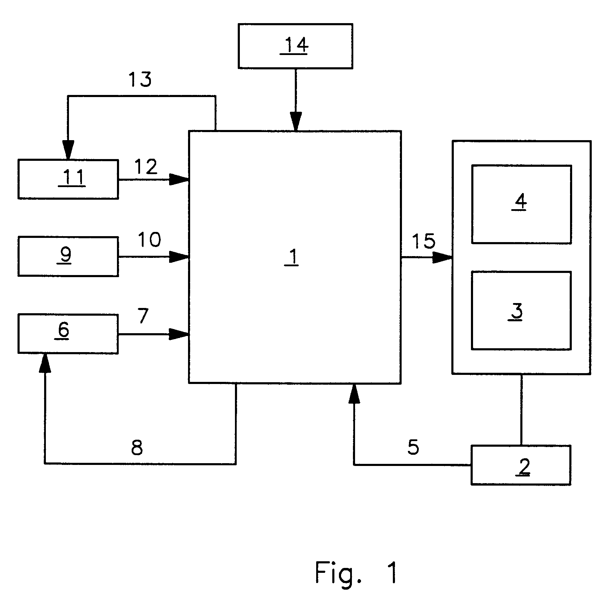

In Fig. 1 ist das Blockschema zum "Integrierten Sehen" und zum Arbeiten von der Ferne in unzugänglichen Räumen dargestellt. Der Operateur 2 verfolgt die Arbeitsszene nebeneinander auf dem 3 D-Computergraphik-Bildschirm 3 und auf dem TV-Bildschirm 4.

Der Operateur kann auf dem Weg 5 das im Realzeit-Graphikcomputer 1 gespeicherte Modell der Arbeitsumgebung bzw. des Arbeitsraumes modifizieren, beliebige Ansichten von dem Modell einstellen und die TV-Kamera führen oder aus beliebigem Blickwinkel die Szene beobachten.

Der Manipulator 6 gibt über den Weg 7 ständig seine aktuelle Arbeitsposition (durch die Sensorsignale) in den Computer 1 ein, wobei der Verlauf der Arbeitsposition dann nach Bedarf gespeichert und für einen evtl. späteren Gleichablauf abgerufen wird.

Über die Speichereinrichtung der Umgebung 9 sind alternative Positioniermöglichkeiten für einbaubare Teile nachprüfbar oder auch wieweit solche Teile überhaupt am Ort sind. Abgerufen wird diese Information vom Computer über den Weg 10.

Das aufgenommene Bild der Kamera wird nach entsprechender A/D-Wandlung über den Weg 12 dem Graphik-Computer zugeführt und wird nun dort mit dem erstellten Modell verglichen. Somit ist das synthetische Bild mit der echten Umgebung vergleichbar, womit eine Kontrolle gegeben ist.

Über den Weg 13 wird die Kamerasteuerung oder die Hochführung der Kamera im on-line-Betrieb vollzogen.

Die Programmierschnittstelle ist über den Weg 8 gegeben. Hierbei ist die Einrichtung geschaffen, off-line-Programmieren durchzuführen. Es können Arbeitsabläufe für den Manipulator am Arbeitsort oder Fahrprogramme für den Manipulator zum Arbeitsort entworfen, entwickelt und untersucht werden, d.h. die Manipulatorsteuerung wird hierüber geladen.

Schließlich ist noch die Einrichtung geschaffen, bereits existierende Geometriemodelle über die CAD-Schnittstelle 14 aus kommerziellen CAD-Systemen 15 in den Realzeit-Graphik-Computer zu übernehmen.

Als maßgebliche Einrichtungen beinhaltet dann der Realzeit-Graphik-Computer die Realzeit-3D-Simulationssoftware, den Modell-Editor zum Erstellen des geometrisch kinematischen 3D-Modells, den Programm-Editor für die Ablauf- und Arbeitsprogramme, die Kollisionsüberwachung für den Manipulatorarm und den Manipulator selbst als auch die Kollisionsverhinderung.

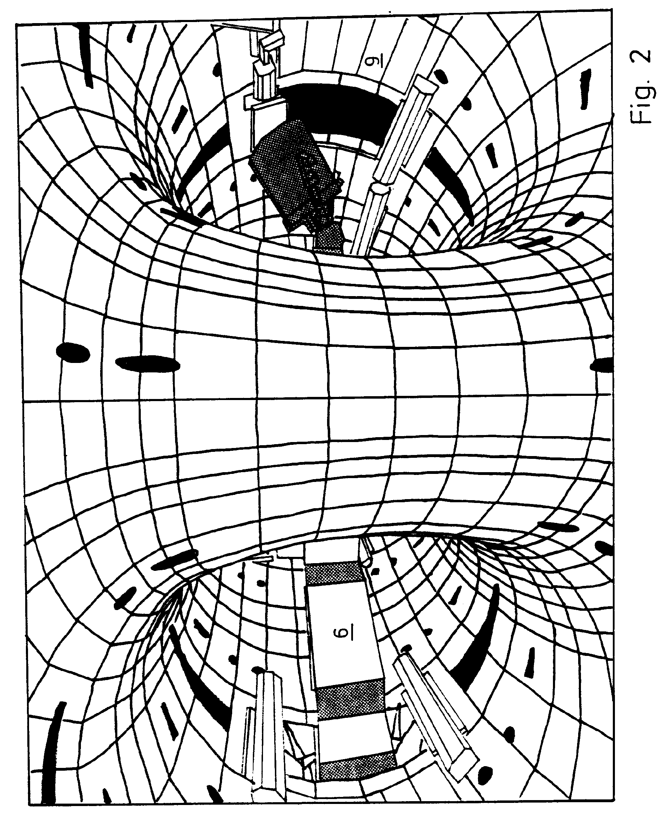

Fig. 2 zeigt die Momentaufnahme bzw. das computergraphische Bild vom Innern eines Torus einer Fusionsmaschine. Der vielgelenkige Greifarm tritt in der linken Bildseite durch die dortige Öffnung in den Torusraum ein und bewegt sich um die Mittelsäule kollisionsfrei bis zu dem Ort weiter, an dem irgendwelche Manipulationen vorgenommen werden. Bewegungen des Manipulationsarms werden über Sensoren ständig zur Änderung des vorliegenden Modells im Computer verwendet, und zwar in Realzeit.

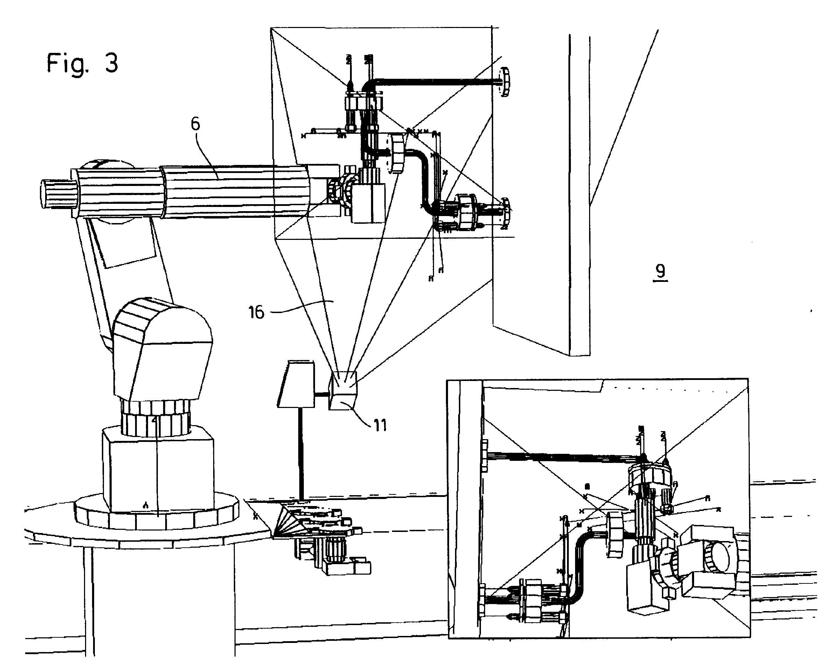

Fig. 3 zeigt eine andere Arbeitsumgebung. In dem Gesamtbild ist eine Übersicht davon dargestellt. Der Arbeitsarm-Manipulator ist in zwei Laufschienen eingehängt und bringt nun seine Zange oder das eigentliche Manipulatorteil über Gelenkbewegungen, die über Sensoren erfaßt werden, an den Ort der eigentlichen Arbeitsausübung. Das ist hier durch den rechteckigen Querschnitt der Sichtpyramide, die von der Kamera im oberen Bildhintergrund ausgeht, angedeutet. Die Darstellung dieses Gebiets z.B. in der linken oberen Bildecke simuliert den Blick durch die Beobachtungskamera, deren Einstellung so optimal geplant wird. Die Bewegungen des Arbeitsarms bzw. des Manipulators werden in allen Einzelheiten und in ihrem Ablauf über die Sensorsignale aufgenommen. Diese Bewegungen und Abläufe sind editierbar, so daß neue Bewegungs- bzw. Manipulationsabläufe vorgegeben oder Routineabläufe notwendig oft automatisch durchgeführt werden können. Der Gesamtarbeitsraum ist von jeder Position aus darstellbar, ebenso die kleinere Umgebung der eigentlichen Handlung.

### Bezugszeichenliste

- 1: Realzeit-Graphik-Computer, Graphik-Computer, Computer
- 2: Operateur
- 3: Computergraphik-Bildschirm
- 4: TV-Bildschirm
- 5: Weg
- 6: Manipulator
- 7: Weg
- 8: Weg
- 9: Umgebung
- 10: Weg
- 11: Kamera
- 12: Weg
- 13: Weg
- 14: Weg
- 15: CAD-Schnittstelle
- 16: Sichtpyramide, Drahtmodell

## Patentansprüche

1. Verfahren zur Manipulation in einer unzugänglichen und nicht direkt einsehbaren Arbeitsszene mit einem durch einen echtzeitfähigen Rechner (1) ferngesteuerten Manipulator (6), wobei die Objekte in diese Szene durch ein mathematisches Modell repräsentiert sind, das fortwährend durch Sensorinformationen aktualisiert wird, Manipulationen über den Manipulator (6) entweder vorprogrammiert oder von einem Operateur (2) per Hand veranlaßt werden und im Falle der Bedienung des Manipulators (6) durch den Operateur (2) dieser ständig Informationen über die aktuelle Position des Manipulators (6) enthält,
dadurch gekennzeichnet, daß
a) die Szene gleichzeitig durch ein mathematisches Modell der Szene, das in dem Rechner (1) gespeichert ist, und in einer pseudo-dreidimensionalen Graphik auf einem Bildschirm (3) abgebildet wird, wobei das Modell periodisch durch von Sensoren zur Verfügung gestellte Daten aktualisiert wird und durch ein Fernsehsystem (4) dargestellt wird;
b) in die sensorgesteuerte, realitätsnahe, dreidimensionale Computer-Graphik die Kameras (11) des Fernsehsystems (4) eingeblendet werden und deren momentan ausgerichtete Sichtpyramide (16) durch ein Drahtmodell (16) zur Erleichterung der Interpretation der Kamerabilder und zur einfacheren Einstellung der Kameras (11) mit eingeblendet werden;
c) mit einem Realzeitsimulator des Rechners (1) das Ausrichten der Kameras (11) und des die Sichtpyramide (16) andeutenden Drahtmodells (16) auf ein neues Zielgebiet mit Hilfe der synthetischen Szenendarstellung einerseits simuliert wird und andererseits die Kameras (11) bei bewegten Kameraträgern oder bei bewegten Zielen tatsächlich automatisch entsprechend nachgeführt werden.

2. Verfahren nach Anspruch 1,
dadurch gekennzeichnet, daß
die Simulation neuer Arbeitsabläufe in Realzeit und die Programmierung neuer Arbeitsabläufe sowie ihre sofortige Ausführung mit Hilfe des Realzeitsimulators des Rechners (1) durchgeführt wird.

3. Verfahren nach Anspruch 2,
dadurch gekennzeichnet, daß
die aktuelle über die Sensoren erfaßte Arbeitssituation und der dortige Arbeitsablauf in dem Rechner (1) gespeichert wird.

4. Verfahren nach Anspruch 3
dadurch gekennzeichnet, daß
der Arbeitsablauf automatisch durchgeführt wird.

## Claims

1. Method of manipulation in an inaccessible and not directly visible working area, utilising a manipulator (6) which is remote-controlled by means of a real-time computer (1), the objects in this area being represented by a mathematical model which is continuously updated by sensor information, manipulations being either preprogrammed via the manipulator (6) or effected manually by an operator (2) and, in the case where the manipulator (6) is employed by the operator (2), the latter constantly receiving information concerning the actual position of the manipulator (6), characterised in that
a) the area is simultaneously illustrated by a mathematical model of the area, which model is stored in the computer (1), and in pseudo-three-dimensional graphics on a display screen (3), the model being periodically updated by data made available by sensors and represented by a television system (4),
b) the cameras (11) of the television system (4) are inserted into the sensor-controlled, realistic, three-dimensional computer graphics, and the instantaneously aligned display pyramids (16) thereof are jointly inserted by a wire model (16) in order to facilitate the interpretation of the camera images and in order to adjust the cameras (11) more easily;
c) the alignment of the cameras (11) and of the wire model (16), which indicates the display pyramids (16), is simulated by a real-time simulator of the computer (1) onto a new target area by means of the synthetic representation of the area, on the one hand, and the cameras (11) are actually automatically followed accordingly in the case of moving camera supports or in the case of moving targets, on the other hand.

2. Method according to claim 1, characterised in that the simulation of new operating sequences is effected in real time, and the progamming of new operating sequences and their immediate execution are effected by means of the real-time simulator of the computer (1).

3. Method according to claim 2, characterised in that the actal working situation, determined via the sensors, and the operating sequence there are stored in the computer (1).

4. Method according to claim 3, characterised in that the operating sequence is automatically effected.

## Revendications

1. Procédé de manipulation dans des lieux de travail non accessibles et non directement visibles avec un manipulateur (6) télécommandé par un calculateur capable de fonctionner en temps réel (1), les objets étant représentés en ce lieu par un modèle mathématique, qui est actualisé de façon continue par des informations de détecteurs, des manipulations étant soit préprogrammées au moyen du manipulateur (6) soit réalisées par un opérateur (2) à la main et au cas où le manipulateur (6) est actionné par l'opérateur (2) celui-ci contient en permanence des informations sur la position actuelle du manipulateur (6), caractérisé en ce que :
a) le lieu est reproduit en même temps par un modèle mathématique du lieu, qui est mis en mémoire dans le calculateur (1) et en un graphique pseudo-tridimensionnel sur un écran (3), le modèle étant actualisé périodiquement par des données mises à disposition par des détecteurs et étant représenté par un système de télévision (4).
b) sur le graphique du calculateur commandé par les détecteurs, proche de la réalité, en trois dimensions, les caméras (11) du système de télévision (4) sont sur impressionnées et ses pyramides de vision (16) momentanément alignées étant surimpressionnées en même temps par un modèle à fils (16) servant à faciliter l'interprétation des images des caméras et à installer plus simplement les caméras (11).
c) avec un stimulateur en temps réel (1) du calculateur, on simule l'alignement des caméras (11) et du modèle à fils (16) indiquant la pyramide de vision (16) sur un nouvel objectif à l'aide de la représentation synthétique du lieu d'une part et les caméras (11) d'autre part quand on déplace leurs supports ou quand les objectifs se déplacent, accomplissant un mouvement panoramique effectivement automatique de façon correspondante.

2. Procédé selon la revendication 1, caractérisé en ce que l'on réalise la simulation de nouveaux déroulements de travail en temps réel et la programmation de nouveaux déroulements de travail ainsi que leur exécution immédiate à l'aide du simulateur en temps réel (1) du calculateur.

3. Procédé selon la revendication 2, caractérisé en ce que l'on met en mémoire dans le calculateur (1) la situation actuelle de travail détectée au moyen des capteurs et le déroulement du travail à cet endroit.

4. Procédé selon la revendication 3, caractérisé en ce que le déroulement du travail est exécuté automatiquement.
